# EUROPEAN PATENT APPLICATION

(11) **EP 4 567 725 A1**
(43) Date of publication of application: **11.06.2025**
(21) Application number: 24150701.1
(22) Date of filing: 08.01.2024
(51) Int. Cl.: G06T 7/00

(54) **ASSESSING MEDICAL IMAGE QUALITY**

(30) Priority: 08.12.2023 US 202363607646 P
(71) Applicant: Koninklijke Philips N.V., 5656 AG Eindhoven (NL)
(72) Inventor: GESSERT, Nils Thorben, Eindhoven (NL); WAECHTER-STEHLE, Irina, Eindhoven (NL); WEHLE, Simon, 5656AG Eindhoven (NL); GOOßEN, Andre, Eindhoven (NL); CHAUDHARI, Ashish Motiram, Eindhoven (NL); SADEGHI, Seyedali, Eindhoven (NL)
(74) Representative: Philips Intellectual Property & Standards

(57) **Abstract**

Embodiments of the invention aim to provide a method for assessing the quality of a medical image. This is achieved by determining, using machine learning models, an absolute image quality value and a comparative image quality value of the medical image. The comparative image quality value describes the relative quality of the image in relation to a suitably selected reference image. An overall image quality value is then determined based on the absolute image quality value and the comparative image quality value.

## Description

### FIELD OF THE INVENTION

The invention relates to the field of imaging, and more specifically to the field of assessing medical image quality.

### BACKGROUND OF THE INVENTION

In medical imaging examinations, accurate image quality and suitability assessment is key. If images obtained in a medical examination are of insufficient image quality, key measurements and diagnosis may not be performed and the medical examination may be deemed to be a failure.

However, image quality is often difficult to assess and can be highly subjective. For technically difficult patients, it is often unclear whether an image taken in a medical exam is of sufficient quality for diagnosis and examination procedures or whether the medical professional carrying out the patient examination should attempt to acquire more images in the hope that an image of better quality can be obtained.

Automatic image quality scoring is possible using machine learning models, however image quality and suitability scoring is often subjective and therefore annotating suitable data for training such a model is highly challenging.

### SUMMARY OF THE INVENTION

The invention is defined by the claims.

According to examples in accordance with an aspect of the invention, there is provided a method for assessing the quality of a medical image. The method comprises: processing the medical image with a first machine-learning model to determine an absolute image quality value of the medical image; analysing the medical image to select a reference image from a plurality of different possible reference images; processing the medical image and the selected reference image with a second machine-learning model to determine a comparative image quality value describing the quality of the medical image relative to the selected reference image; and determining, based on the absolute image quality value and the comparative image quality value, an overall image quality value of the medical image.

Proposed concepts thus aim to provide schemes, solutions, concepts, designs, methods, and systems pertaining to assessing the quality of medical images. In particular, embodiments aim to provide a method for automatically assessing the quality of a medical image by calculating both an absolute image quality value and a comparative image quality value, where the comparative image quality describes the quality of the image relative to a suitably selected reference image.

In particular, it is proposed that both an absolute image quality value and a comparative image quality value may be used to assess the overall image quality of a medical image. The second of these values is obtained by providing the medical image to be assessed and a pre-selected reference image as inputs to a machine learning model that then outputs the relative quality of the medical image in relation to the reference image. The reference image is selected from a plurality of different possible reference images based on analysis of the medical image to be assessed.

Automatic image quality assessment is important in the field of medical imaging. During a medical imaging examination process it is important to ensure that a sufficient number of high-quality images have been obtained to be used for measurement and diagnosis. Further, during the diagnosis stage automatic medical image quality assessment may be useful for comparing the suitability of different images of the same patient for diagnosis processes.

It has been realised that comparative image quality values obtained by pair-wise comparisons between images are often more consistent and reliable than absolute image quality values obtained by machine learning models trained on a dataset of images annotated subjectively with absolute image quality values. Further, in the context of medical imaging, comparative image quality values may be especially useful in indicating whether a given medical image is of sufficient quality to enable reliable diagnosis from the image, as the quality of an image may be compared to a previously acquired image which resulted in successful diagnosis. It was further recognised that image quality assessment may be dependent on several characteristics of the image to be assessed and that therefore a suitable reference image should be selected based on analysis of the medical image to be assessed, to ensure the most suitable comparative image quality value is obtained.

The proposed invention therefore leverages both an absolute image quality value and a comparative image quality value to automatically provide an overall image quality value describing the image quality of a medical image. The resulting image quality assessment may be more reliable and accurate than previously known manual or automatic image quality assessments based on subjective annotation of absolute image quality scores.

In some embodiments, analysing the medical image to select a reference image may further comprise: processing the medical image with an image identification model to determine at least one image parameter of the medical image; and selecting, based on the determined at least one image parameter, a reference image from a plurality of different possible reference images. In this way, a suitable reference image can be selected based on various parameters of the medical image to be assessed which may affect its image quality.

In some embodiments, the at least one image parameter may comprise at least one of: a view position; an anatomical feature; an orientation of an anatomical feature; a patient identification value; an examination identification value; a date; and an image sensor identification value. Therefore, the reference image may be selected to show the same anatomical feature as the medical image or be of the same patient for example. Image quality may vary depending on various parameters of the medical image and so selecting a suitable reference image based on at least one of these parameters may be important for ensuring the accuracy of the determined comparative image quality value.

In some embodiments, the first machine learning model may be trained using a deep learning algorithm configured to receive an array of training inputs and respective known outputs. The training input of the second machine learning model may be a first training image from a pair of training images and the respective known output may be an absolute image quality value, and wherein the absolute image quality value is calculated from a comparative image quality value associated with the pair of training images. Calculating absolute quality values for a training dataset from comparative quality values in this way may be more accurate than obtaining absolute quality values directly, which is often subjective.

In some embodiments, calculating the absolute quality value of the first training image form the comparative image quality value associated with the pair of training images comprises using an Elo-based transformation system. This provides an accurate, robust, and efficient method of obtaining absolute image quality values from pair-wise image quality comparison values.

In some embodiments, the absolute image quality value may comprise a plurality of values describing the respective image quality of a plurality of different anatomical features present in the medical image. The proposed method may therefore provide detailed feedback on the quality of the various features depicted in the image which may provide useful information to a medical professional assessing an image for its usefulness in diagnosis which may require only specific anatomical features to be imaged with high quality.

In some embodiments, the selected reference image may have a substantially equal view direction as the medical image to be assessed. This is a useful feature as image quality can vary substantially with view direction and therefore by ensuring the selected reference image has the same view direction as the medical image to be assessed, image quality may be compared between the two images more fairly.

In some embodiments, the selected reference image depicts the same anatomical features as the medical image to be assessed. This enables the image quality of the depicted anatomical features to be compared directly between the medical image and the reference image, ensuring a more accurate and detailed comparative quality value.

In some embodiments, the comparative image quality value may comprise a plurality of values describing the relative image quality of each anatomical feature present in the medical image to be assessed compared to the image quality of the same anatomical feature depicted in the reference image. In this way, the proposed method may provide detailed information of the comparative image quality of each anatomical feature in the medical image. This may be useful in medical imaging, since only a certain portion of the whole system being imaged may be important for diagnosis and assessment, and therefore a detailed breakdown of the image quality of each feature in the image enables a medical professional to decide whether the medical image is suitable for its required use.

In some embodiments, the method may further comprise determining, based on comparing the determined overall quality value to a first threshold, a suitability value of the medical image. In this way, the overall quality value may be used to automatically determine whether the medical image is suitable for use in diagnostic procedures or for further assessment of the state of the patient.

In some embodiments, the overall quality value may comprise at least one of: the absolute image quality value; and the comparative image quality value. In this way, the overall image quality value may simply comprise one or both of the determined image quality values. For example, the method may further include a determination of which image quality value is likely to be more suitable and/or accurate and the overall image quality may be selected from the absolute image quality value and the comparative image quality value based on this determination.

According to another aspect of the present invention, there is provided a computer program comprising code means for implementing the method of any proposed embodiment when said program is run on a processing system.

According to another aspect of the invention, there is provided a processing arrangement configured to: process a medical image with a first machine-learning model to determine an absolute image quality value of the medical image; analyse the medical image to select a reference image form a plurality of different possible reference images; process the medical image and the selected reference image with a second machine-learning model to determine a comparative image quality value describing the quality of the medical image relative to the selected reference image; and determine, based on the absolute image quality value and the comparative image quality value, an overall image quality value of the medical image.

According to another aspect of the invention, there is provided a medical imaging system adapted for assessing the quality of a medical image, the system comprising a processing arrangement configured to: process a medical image with a first machine-learning model to determine an absolute image quality value of the medical image; analyse the medical image to select a reference image form a plurality of different possible reference images; process the medical image and the selected reference image with a second machine-learning model to determine a comparative image quality value describing the quality of the medical image relative to the selected reference image; and determine, based on the absolute image quality value and the comparative image quality value, an overall image quality value of the medical image.

In an embodiment, the medical imaging system may further comprise at least one of an image sensor; and an output interface configured to output an indication of the determined overall image quality of the medical image.

Embodiments may be employed in combination with conventional/existing medical imaging methods and systems. In this way, embodiments may integrate into legacy systems to improve and/or extend their functionality and capabilities. An improved medical imaging system that automatically assesses image quality may therefore be provided by proposed embodiments.

Thus, there may be proposed concepts for assessing the quality of a medical image by using both an absolute image quality value and a comparative image quality value. These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for assessing the quality of a medical image according to a proposed embodiment;
Fig. 2 is a simplified block diagram of a display interface used in the process of pair-wise annotation of a training dataset;
Fig. 3 is a simplified diagram of an annotation network as a result of pair-wise annotation of a training dataset;
Fig. 4 is a simplified block diagram of a system for assessing the quality of a medical image according to a proposed embodiment;
Fig. 5 depicts an example output interface of a system for assessing the quality of a medical image according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes and/or solutions pertaining to assessing the image quality of a medical image. According to proposed concepts, a number of possible solutions may be implemented separately or jointly. That is, although these possible solutions may be described below separately, two or more of these possible solutions may be implemented in one combination or another.

Embodiments of the invention aim to provide a method for assessing the quality of a medical image. This is achieved by determining an absolute image quality value and a comparative image quality value of the medical image using machine learning models. The comparative image quality value describes the relative quality of the image in relation to a suitably selected reference image. An overall image quality value is then determined based on the absolute image quality value and the comparative image quality value.

Proposed concepts thus aim to provide schemes, solutions, concepts, designs, methods, and systems pertaining to automatically assessing the quality of an image using both an absolute quality score and a relative quality score to describe the quality of the image and its potential usefulness in diagnosis.

Automatic image quality scoring in this way during a medical examination could help to overcome the issue of failed examinations due to insufficiently high-quality images being obtained. In applying the method described herein, medical professionals could be provided with a real-time automatic assessment of the quality of images being obtained during an examination. Previously, medical professionals may have taken more images than were necessary in order to ensure that at least some of the images taken were of sufficient quality for use in diagnosis. By applying the proposed method, medical professionals could be provided with increased confidence that images that have been taken are of sufficient quality. This may lead to fewer images being taken during an examination and therefore reduced examination times. Further, examination failure could be prevented if the medical professional carrying out the examination is informed early if not enough images of sufficient quality have been taken.

When performing measurements or diagnosis using a medical image, an accurate assessment of the quality of the image may be useful. If the image is of low-quality it may be useful for some purposes but not for others, and so automatic image quality assessment at this stage may enable the best images to be selected for certain measurements and/or diagnosis procedures. For example, certain images may have very high image quality for a certain feature of the system being imaged, but low quality for other features. This may make the image only suitable for diagnosis of disorders that affect the feature that is present with high image quality.

By way of summary, the following steps outline a process according to the proposed concept(s):
Step 1: determine an absolute image quality value of the medical image to be assessed. This is achieved by processing the medical image with a first machine learning model.
Step 2: select, based on analysis of the medical image to be assessed, a suitable reference image. In some embodiments the reference image may be selected to have the same view position or depict the same anatomical features as the medical image for example.
Step 3: using a second machine learning model, determine a comparative image quality value describing the quality of the medical image being assessed relative to the quality of the selected reference image.
Step 4: based on the determined absolute image quality value and the determined comparative image quality value, determine an overall image quality value.

Measures of image quality relate to the fidelity with which an image represents the anatomical features it depicts. Therefore, an image quality value may incorporate metrics relating to resolution, signal-to-noise ratio, dynamic range, contrast, aberration, and the presence of artifacts. Other metrics relating to image accuracy and clarity may also be included in the image quality value. Importantly for the present invention, the image quality value may include more advanced image quality values relating specifically to the visibility of the anatomical features depicted in the image. For example, in the case of an image of a cardiovascular system, an image quality value may describe wall segment visibility or valve visibility. The specific information contained within an image quality value may depend on the type of imaging technique used to acquire the image. Image quality values may be qualitative or quantitative. For example, a quantitative image quality value may be high, medium, or low, and a quantitative image quality value may be a quality ranking value between 1 and 100 for example.

The medical image to be assessed by the present invention may be any medical image for which an image quality assessment is required. For example, the medical image may be an image of an anatomical feature of a subject (human or animal) acquired by any available medical imaging technique. This may include x-ray images, ultrasound images, CT (x-ray computed tomography) images, PET (positron emission tomography) scanner images, MRI (magnetic resonance imaging) images, or ultrasound images.

The method of the present invention relies upon the use of machine learning models. The first machine learning model and the second machine learning models employ machine learning algorithms to determine the absolute image quality value and the comparative image quality value respectively. A machine-learning algorithm is any self-training algorithm that processes input data in order to produce or predict output data. Here, the input data comprises the medical image to be assessed for the first machine learning model and the medical image along with the selected reference image for the second machine learning model. The output data comprises an absolute image quality value of the medical image for the first machine learning model and a comparative image quality value describing the quality of the medical image relative to the selected reference image in the case of the second machine learning model.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives. Purely by way of example, one or more of the machine learning models may employ a Convolution Neural Network, because CNNs have been proven to be particularly successful at analysing images, and being able to identify objects within images, with a much lower error rate than other types of neural network.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g., the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). Some embodiments of the present invention may employ CNN-based learning algorithms, because CNNs have proved to be particularly successful at analysing images, and are able to identify objects within images with a much lower error rate than other types of neural network.

CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Alternatively, embodiments may employ a vision transform (ViT). Vision transformers are a type of deep learning algorithm that rely on analysing patches of pixels in an image. Vision transformers have proven to be equally successful at image classification tasks as CNNs while requiring substantially fewer computational resources in training.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g., ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

In other words, the first machine learning model and the second machine learning model may be trained using a deep learning algorithm configured to receive an array of training inputs and respective known outputs. The training inputs of the first machine learning model are medical images and the respective known output is an absolute image quality value of each of the medical images. The training inputs for the second machine learning model are pairs of medical images comprising a first training image and a second training image, and the respective known output is a comparative image quality value describing the quality of the first training image relative to the second training image. In this way, the first machine learning model may be trained to output an absolute image quality value describing the image quality of the medical image to be assessed, and the second machine learning model may be trained to output a comparative image quality value describing the quality of the medical image relative to a reference image.

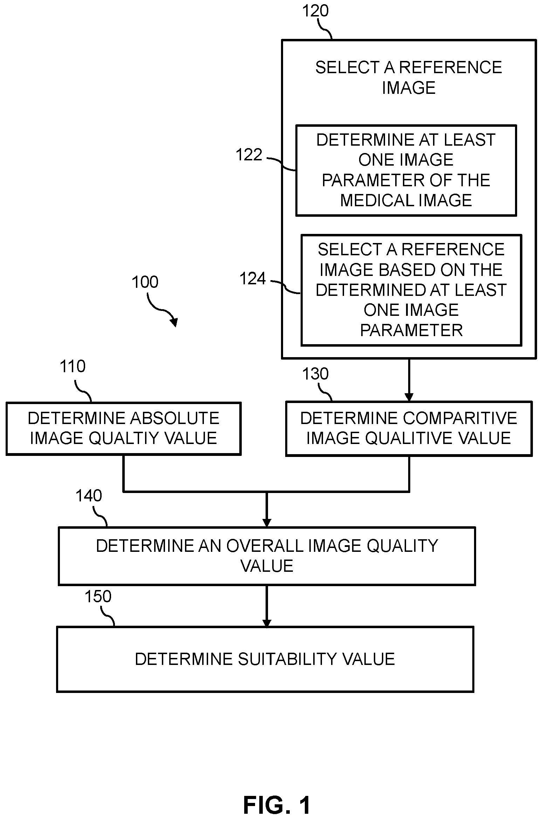

Referring now to Fig. 1, there is depicted a simplified flow diagram of a method 100 for assessing the quality of a medical image according to a proposed embodiment.

The method starts with a step 110 of determining an absolute image quality value of a medical image. This is achieved by processing the medical image with a first machine learning model. In this exemplary embodiment, the determined absolute image quality comprises a plurality of values describing the respective image quality of a plurality of different anatomical features present in the medical image. This may be advantageous as the image quality may vary significantly across the field of view and for features that are orientated differently with respect to the image view direction. For the purposes of diagnosis and measurement, only certain features depicted in the image may need to have high image quality, and so this information may be useful in determining if the medical image is suitable for use. Further, when the present invention is being used during an examination, this detailed information may be useful in guiding the medical professional carrying out the examination as to what adjustments need to be made to the imaging process in order to ensure images of sufficient quality are obtained. In this exemplary embodiment the absolute image quality value associated with each feature in the image is determined to be high, medium, or low.

The method further involves the step 120. In this step the medical image is analyzed to select a reference image form a plurality of different possible reference images. In this exemplary embodiment, the step 120 further comprises the sub-steps 122 and 124. Step 122 comprises processing the medical image with an image identification model to determine at least one image parameter of the medical image. In this exemplary embodiment, the determined at least one image parameter describes the anatomical features present in the medical image, the view position associated with the medical image, and the imaging technique used to obtain the image. For example, it may be determined by the image identification model that the medical image is an ultrasound image of a heart in the posterior-anterior view direction. Step 124 comprises selecting a reference image from a plurality of possible reference images based on the determined at least one image parameter. For example, for the medical image outlined above, the reference image may be selected to also be an ultrasound image of a heart imaged in the posterior-anterior view position.

Once the reference image has been selected, the method proceeds to a step 130 comprising processing the medical image and the reference image with a second machine learning model to determine a comparative image quality value describing the quality of the medical image relative to the quality of the selected reference image. In this exemplary embodiment, the comparative image quality value comprises a plurality of values describing the relative image quality of each anatomical feature present in the medical image compared to the image quality of the same anatomical feature depicted in the reference image. In the present exemplary embodiment, this comprises a series of determination of higher, lower, or equal image quality in the medical image relative to the reference image for each anatomical feature in the medical image. In this way information is provided that directly compares the image quality of common features present in both the reference image and the medical image. This may be useful in application of the method to a medical examination process, as the medical professional carrying out the examination may be provided with information describing whether a particular feature has been imaged with better quality in the past.

Once the comparative image quality and the absolute image quality have been determined, the method proceeds to step 140 which comprises determining, based on the absolute image quality value and the comparative image quality value, an overall image quality value. In this exemplary embodiment, the overall image quality comprises at least one of: the absolute image quality value and the comparative image quality value.

The method then proceeds to a step 150 comprising determining a suitability value of the medical image, based on the overall image quality value determined in step 140. This describes, based on the image quality of the medical image, how suitable the medical image may be for use in diagnosis and further assessment processes. For example, if the image quality is deemed to be low, the medical image may be deemed unsuitable for use for diagnosis and measurement. The suitability value may be a binary determination of "suitable" or "unsuitable" or may alternatively provide further, more detailed determinations of how useful the image is likely to be.

Although in this exemplary embodiment, the absolute image quality value and the comparative image quality value comprise a plurality of values relating to the image quality of various anatomical features depicted in the medical image, in other embodiments this need not be the case. For example, in an alternative embodiment the absolute image quality value and the comparative image quality value may simply be single values describing an image quality of the entirety of the image. Similarly, although in the above example both the absolute image quality value and the comparative image quality value are qualitative values, in other examples they may be quantitative. For example, the absolute image quality value may be an image quality ranking between 1 and 10, and the comparative image quality value may be the different in ranking on this same scale between the quality of the medical image relative to the reference image.

Similarly, other aspects of the method outlined above may be implemented differently in alternative embodiments. For example, although in the above method the at least one image parameter determined by the image identification model relates to the anatomical features present in the medical image, the view direction associated with the medical image and the imaging technique used to acquire the medical image, in other embodiments different image parameters may be determined. For example, at least one image parameter may comprise at least one of: a view position; an anatomical feature; an orientation of an anatomical feature; a patient identification value; an examination identification value; a date; and an image sensor identification value. Selecting the reference image based on this image parameter may then involve selecting a reference image that is associated with the same patient as the medical image, and/or acquired by the same examination process or image sensor. The selected reference image could also be an image taken on the same date as the medical image.

The image identification model may be implemented using any well-known image processing technique. For example, the image identification model could be configured to recognise and extract information from metadata tags associated with the medical image. Alternatively, the image identification model could include a machine learning model trained to identify imaging parameters of the medical image.

The sub-steps 122 and 124 may not be present in some embodiments of the present invention, i.e., in some embodiments selecting a suitable reference image may not require processing the medical image with an image identification model to determine an image parameter of the image. For example, the medical image may be provided with a tag identifying a suitable reference image (e.g., that has been identified by a medical professional as being suitable) which is used when the image is analysed to select the reference image form a plurality of different possible reference images. The key here is simply that information associated with the medical image to be assessed is used to select the reference image from a number of different possible reference images. Further the step 150 may not be carried out in alternative embodiments. Some embodiments may simply result in the production of an overall image quality value.

The overall image quality value determined in the method 100 comprises at least one of the absolute image quality value and the comparative image quality value. In other embodiments, the overall image quality value may describe an average of the absolute image quality value and the comparative image quality value. Alternatively, other formulas and calculations may be used to derive the overall image quality value from the absolute image quality value and the comparative image quality value depending on the relative reliability of the two values. For example, if the comparative image quality value is deemed to be more accurate than the absolute image quality value, the comparative image quality value of the image may be given a greater weighting than the absolute image quality value in the calculation of the overall image quality value.

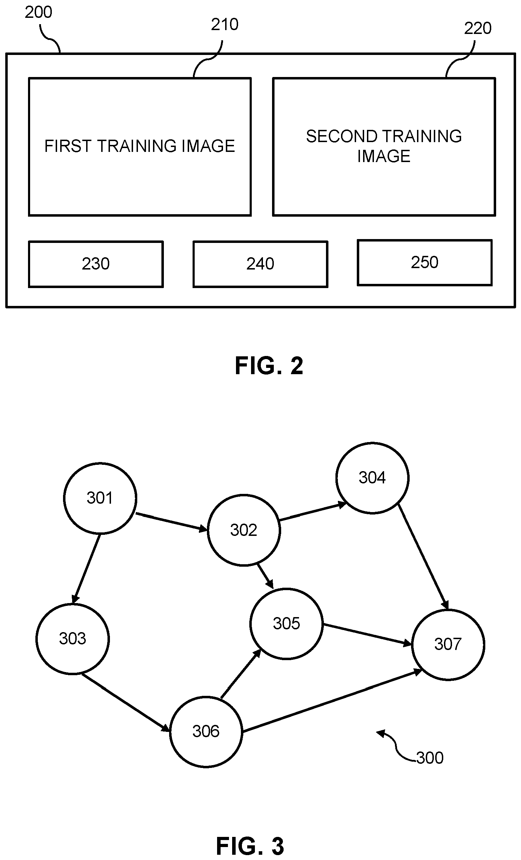

Producing a suitable training dataset for the first machine learning model may be challenging. Manual annotations of training images with absolute quality scores are often very subjective and can introduce significant bias into the determination of image quality when a model is trained on an annotated dataset obtained in this way. Certain embodiments of the present invention attempt to overcome this issue by calculating image quality annotations for a training dataset using pair-wise image quality comparisons. This may lead to better and more consistent image quality labels. Further details of this annotation process are discussed below with reference to Figs. 2 and 3.

Fig. 2 is a simplified block diagram of a user interface used in the process of pair-wise annotation of a training dataset. A training dataset of suitable medical images is obtained. Annotation of the dataset is then carried out via the following process. Pairs of training images including a first training image 210 and a second training image 220 are displayed to a trained individual employed in the role of annotation via a user interface 200. The user is then also presented with three annotation outcomes 230, 240, and 250. The outcome 230 relates to an annotation designating that the first training image 210 has higher image quality than the second training image 220. Outcome 240 relates to an outcome in which the pair of images are annotated to have the same image quality. Outcome 250 relates to an annotation in which the second training image 220 is designated to have higher image quality. In this example the user interface is a touch sensitive screen and so the annotating individual may then select via the user interface 200 which outcome (230, 240, or 250) they feel is the most suitable for the pair of training images they have been presented with.

Alternative embodiments may utilise a different user interface configuration to that of the touch sensitive user, for example the user interface may comprise an input interface allowing the user to select an annotation outcome, and an output interface for displaying the pair of training images. For example, the output interface may be a computer monitor and the input interface maybe a keyboard. Once an annotation outcome has been selected by the annotator, this result is stored alongside the training data base and the user is presented with another pair of training images to annotate in a similar manner. In this way, a database of annotated pairs of training images may be built up, with each pair annotated with a pair-wise quality comparison value describing which (if any) of the two images is deemed to be of greater quality.

As a result of these pair-wise annotations an annotation network may be built up. A simplified example 300 of such a network is depicted in Fig. 3. Each circle (or node) of the network represents an image of the annotated training dataset. For example, the network 300 depicts the images 301, 302, 303, 304, 305, 306, and 307. The arrows (or edges) of the network represent pair-wise annotations of comparative image quality. The arrow starts at an image deemed to be of higher quality and points towards an image deemed to be of lower image quality. For example, in the annotation network 300 it can be seen that the image 301 has been annotated to be of higher quality than both the image 302 and the image 303.

An annotation network such as that displayed in Figure 3 may then be used to calculate an absolute image quality score for each image of the training dataset. This may be achieved using an Elo-based transformation system. This involves simulating a number of "games" between images of the training database. Each connection (or arrow) in the annotation network determines the outcome of a game between the two associated images, with the image deemed to be of higher quality being said to have "won" the game. For each game played, the rating of the winning image goes up and the rating of the losing image goes down. How much the ratings of the two images are adjusted as a consequence of the game is related to the current rating of the images. Once a sufficient number of games have been simulated the rating values of the set of images stabilise. For example, games may be simulated with around 200 iterations until the average rating change as a result of each game is around 0.1%. As a result of this process a quality rating for each image is obtained. A higher rating indicates that the image is of higher quality while a lower score indicates that the image is of lower quality.

An Elo-based rating system naturally follows a Gaussian distribution, with very low and very high ratings being widely scattered. In order to group images with a certain quality in a better way, a flattening function may be employed to flatten the distribution of quality ratings. This flattening process may result in the images with ratings in the lowest 10% to be mapped to a common absolute image quality score. Similarly, images with the highest 10% of quality ratings may be mapped to a common absolute image quality value. The flattened distribution may be more easily learnable by a machine learning model. In this way, an absolute image quality value may be obtained for each image in the training database.

It was found that using pair-wise quality annotation in this way to produce absolute quality values for a set of training images, results in a substantially improved interobserver variability across annotators. A conventional annotation approach in which annotators are asked to assign quality values to images in a training dataset (for example they may be asked to assign a value of 1-low quality, 2-medium quality, or 3-high quality to each image) results in little to no agreement between experts. It is therefore unsuitable to use this annotation method to annotate a training database for use in training a machine learning model as the resulting model may result in highly subjective image quality scores. In contrast, the pairbased annotation strategy presented above shows substantially improved interobserver variability across annotators.

It will be understood that although in the above outlined example a single quality value is obtained for each image describing the quality of the entire imaged field of view, in alternative embodiments a similar process may be used to obtain more detailed image quality values relating to each feature present in the image. For example, the training dataset may contain only images of a particular anatomical feature e.g., a heart. The annotator is then presented with two training images of hearts and asked to compare the image quality of each feature of the heart present in the training images. For example, the annotator may be asked to compare the image quality of the left ventricle, the mitral valve, the tricuspid valve, the aortic valve, the pulmonary valve, foreshortening, papillary muscles, and the right ventricle. In this case, the absolute quality value of each image obtained by the above process will comprise a plurality of quality values describing the respective image quality of the plurality of different anatomical features present in the medical image.

The annotated dataset of medical images produced in this way, may be used for training the first machine learning model used in the method of the present invention. Specifically, the first machine learning model may be trained using a deep learning algorithm configured to receive an array of training inputs and respective known outputs, wherein a training input of the first machine learning model is a first training image the respective known output is an absolute image quality value of the first training image. The absolute quality value may be calculated from at least one comparative image quality value associated with the first training image and describing the quality of the first training image compared to at least one other training image. The absolute image quality value may be calculated from the at least one comparative training image using an Elo-based transformation system as described above.

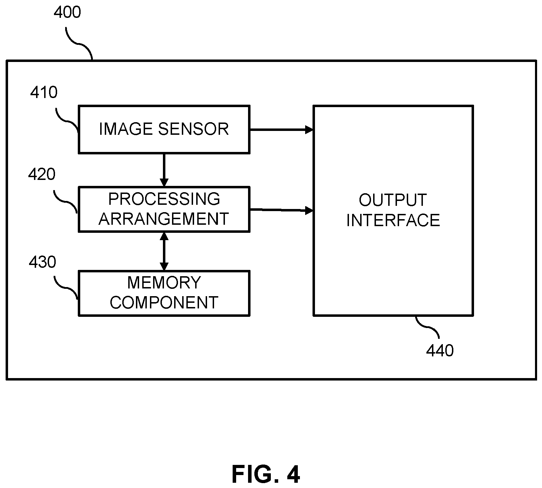

Referring now to Fig. 4, there is depicted simplified block diagram of a medical imaging system 400 for assessing the quality of a medical image according to a proposed embodiment.

The medical imaging system 400 comprises an image sensor 410, a processing arrangement 420, a memory component 430 and an output interface 440. The image sensor 410 is configured to take images of a subject suitably positioned in front of the medical imaging system 400. The image may then be presented to an operator of the medical imaging system via the output interface 440. The image sensor 410 may be any suitable image sensor for use in medical imaging. For example, the image sensor 410 may comprise at least one of: an x-ray detector, an MRI scanner, an ultrasound detector, a CT scanner, a PET scanner, and an infrared detector.

The processing arrangement 420 is configured to assess the quality of the image obtained by image sensor 410. It achieves this by: processing the obtained image with a first machine-learning model to determine an absolute image quality value of the image; analysing the image to select a reference image from a plurality of different possible reference images; processing the obtained image and the selected reference image with a second machine learning model to determine a comparative image quality value describing the quality of the obtained image relative to the selected reference image; and determining, based on the absolute image quality value and the comparative image quality value, an overall image quality value of the image obtained by the image sensor. The plurality of different possible reference images may be stored in the memory component 430 associated with the processing arrangement 420. The obtained image may also be stored in the memory component 430 and may be used as a possible reference image in subsequent examinations using the same medical imaging system.

The processing arrangement 420 and the memory component 430 may be implemented in different ways, with software and/or hardware, to perform the various functions required. The processing arrangement 420 may typically employ one or more microprocessors that may be programmed using software (e.g., microcode) to perform the required functions. The processing arrangement 420 may be implemented as a combination of dedicated hardware to perform some functions and one or more programmed microprocessors and associated circuitry to perform other functions. Examples of circuitry that may be employed in various embodiments of the present disclosure include, but are not limited to, conventional microprocessors, application specific integrated circuits (ASICs), and field-programmable gate arrays (FPGAs).

The memory component 430 associated with processing arrangement 420, may comprise one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

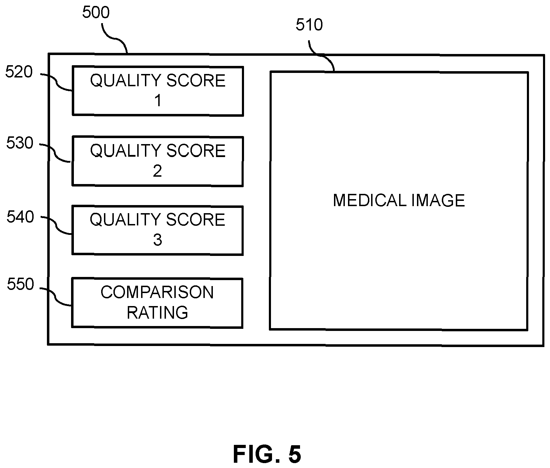

The output interface 440 is further configured to output an indication of the determined overall image quality value to the operator of the medical imaging system. An example of such a configuration is shown in Fig. 5.

Fig. 5 depicts an example output interface 500 of a system for assessing the quality of a medical image according to a proposed embodiment.

The output interface 500 displays a medical image 510, and quality scores 1-3 (520, 530, and 540) and comparison rating 550 associated with the medical image 510. The quality scores 520, 530, and 540 along with the comparison rating 550 may together comprise the overall image quality value of this embodiment of the proposed invention. In this exemplary embodiment the quality scores 1-3 may be absolute image quality scores each relate to different anatomical features present in the image 510. For example, using the method of the proposed invention, it may be determined that the medical image 510 has high image quality for a first feature relating to quality score 1, and low image quality for second and third features relating to quality scores 2 and 3. This may be presented to the operator as either a quantitative score (i.e. a score out of 10 with a score of 10 indicating a feature that has been imaged with high quality) or as a qualitative assessment (i.e. high quality or low quality). Alternatively, the quality scores 1-3 may be presented in the form of suitability assessments, i.e., they may represent a simple assessment of sufficient image quality for diagnosis or insufficient image quality for diagnosis. The quality scores 1-3 may be displayed as numbers, words, or via colour indicators. Although in this example three quality scores are shown, in other embodiments any number of quality scores relating to different features present in the medical image 510 may be shown to the user on the output interface 500.

The comparison rating may be presented to the user as an indication of the comparative image quality value determined for the medical image 510 via the method of any proposed embodiment. For example, the comparison rating may indicate to the operator if images of higher quality have been obtained in the past. For instance, the comparison rating may indicate in words to the operator that previously acquired images may have better image quality for features 2 and 3 depicted in the medical image 510. In this way, the operator may be presented with information that may prompt them to attempt to obtain more medical images of the same patient with higher image quality for features 2 and 3.

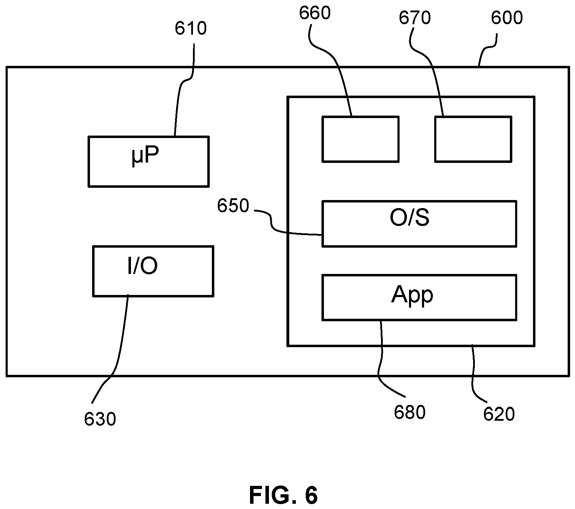

Figure 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor-based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The method of Figure 1, and the system of Figure 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figure 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowcharts and block diagrams in the Figures illustrate the architecture, functionality, and operation of possible implementations of systems, methods, and computer program products according to various embodiments of the present invention. In this regard, each block in the flowcharts or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method (100) for assessing the quality of a medical image, the method comprising:
processing (110) the medical image with a first machine-learning model to determine an absolute image quality value of the medical image;
analysing (120) the medical image to select a reference image from a plurality of different possible reference images;
processing (130) the medical image and the selected reference image with a second machine-learning model to determine a comparative image quality value describing the quality of the medical image relative to the selected reference image; and
determining (140), based on the absolute image quality value and the comparative image quality value, an overall image quality value of the medical image.

2. The method of claim 1, wherein analysing the medical image to select a reference image further comprises:
processing (122) the medical image with an image identification model to determine at least one image parameter of the medical image;
selecting (124), based on the determined at least one image parameter, a reference image from a plurality of different possible reference images;

3. The method of claim 2, wherein the at least one image parameter comprises at least one of: a view position; an anatomical feature; an orientation of an anatomical feature; a patient identification value; an examination identification value; a date; and an image sensor identification value.

4. The method of any of claims 1-3, wherein:
the first machine learning model is trained using a deep learning algorithm configured to receive an array of training inputs and respective known outputs, and
wherein a training input of the first machine learning model is a first training image (210) from a pair of training images (210, 220) and the respective known output is an absolute image quality value, and
wherein the absolute image quality value is calculated from a comparative image quality value associated with the pair of training images.

5. The method of claim 4, wherein calculating the absolute image quality value of the first training image from the comparative image quality value associated with the pair of training images comprises using an Elo-based transformation system.

6. The method of any of claims 1-5, wherein the absolute image quality value comprises a plurality of values describing the respective image quality of a plurality of different anatomical features present in the medical image.

7. The method of any of claims 1-6, wherein the selected reference image has a substantially equal view direction at the medical image to be assessed.

8. The method of any of claims 1-7, wherein the selected reference image depicts the same anatomical features as the medical image to be assessed.

9. The method of claim 8, wherein the comparative image quality value comprises a plurality of values describing the relative image quality of each anatomical feature present in the medical image to be assessed compared to the image quality of the same anatomical feature depicted in the reference image.

10. The method of any of claims 1-9, further comprising:
determining (150), based on comparing the determined overall quality value to a first threshold, a suitability value of the medical image.

11. The method of any of claims 1-10, wherein the overall quality value comprises at least one of: the absolute image quality value; and the comparative image quality value.

12. A computer program comprising code means for implementing the method of any preceding claim when said program is run on a processing system.

13. A processing arrangement (420) configured to:
process a medical image with a first machine-learning model to determine an absolute image quality value of the medical image;
analyse the medical image to select a reference image from a plurality of different possible reference images;
process the medical image and the selected reference image with a second machine-learning model to determine a comparative image quality value describing the quality of the medical image relative to the selected reference image; and
determine, based on the absolute image quality value and the comparative image quality value, an overall image quality value of the medical image.

14. A medical imaging system (400) adapted for assessing the quality of a medical image, the system comprising the processing arrangement of claim 13.

15. The system of claim 14, further comprising at least one of:
an image sensor (410); and
an output interface (440) configured to output an indication of the determined overall image quality of the medical image.
